# FASCICULE DE BREVET EUROPEEN

(11) **EP 1 212 703 B1**
(45) Date de publication et mention de la délivrance du brevet: **08.09.2010**
(21) Numéro de dépôt: 00958603.3
(22) Date de dépôt: 24.07.2000
(51) Int. Cl.: H04L 29/08

(54) **PROCEDE ET DISPOSITIF DE TELECHARGEMENT DE FICHIERS**
VERFAHREN UND VORRICHTUNG ZUM FERNLADEN VON DATEIEN
METHOD AND DEVICE FOR DOWNLOADING FILES

(30) Priorité: 26.07.1999 FR 9909677
(43) Date de publication de la demande: 12.06.2002
(73) Titulaire: FRANCE TELECOM, 75015 Paris (FR)
(72) Inventeur: COURVOISIER, Denis, F-13001 Marseille (FR); DEWOST, Philippe, F-92100 Boulogne Billancourt (FR)
(74) Mandataire: Loisel, Bertrand
(86) Numéro de dépôt international: PCT/FR2000/002128
(87) Numéro de publication internationale: WO 2001/008043

(56) Documents cités:
- EP-A1- 0 849 920
- WO-A1-98/56128
- "Keine Onlinewartezeiten mehr beim Downloaden im Internet" DOWNLOADSLAVE.COM PRESS RELEASE, [en ligne] juin 1998 (1998-06), XP002139192 Extrait de l'Internet: <URL:http://www.downloadslave.com> [extrait le 2000-05-30]
- BROOKS ET AL: "Application-Specific Proxy Servers as HTTP Stream Transducers" INTERNET CITATION,XX,XX, 1 décembre 1995 (1995-12-01), pages 1-9, XP002081461

## Description

La présente invention concerne le domaine des télécommunications et, plus particulièrement, les télécommunications sur un réseau informatique mettant en oeuvre le protocole de communication internet (IP). Cela inclut les protocoles IPv4, présents sur le réseau InterNet, et IPv6 que l'on rencontre déjà dans certains réseaux privés d'entreprise.

Plus particulièrement, l'invention porte sur le téléchargement de fichiers stockés dans un centre serveur Web , c'est à dire un centre serveur supportant le protocole de télécommunications http, ou dans un serveur FTP c'est à dire un serveur supportant le protocole de transfert de fichiers FTP (File Transfert Protocol), vers un poste de travail connecté à un réseau d'accès utilisé par un fournisseur d'accès au réseau informatique dans lequel est placé le centre serveur.

Classiquement, le téléchargement d'un ou de plusieurs fichiers s'effectue en formulant une requête de téléchargement contenant l'adresse du fichier à télécharger accompagnée, le cas échéant, du protocole que le serveur utilise, c'est à dire l'adresse internet ou URL (Uniform Ressource Locator), cette requête étant envoyée directement du poste de l'utilisateur au serveur. En réponse, le centre serveur contenant le fichier transmet directement le fichier vers le poste de travail de l'utilisateur.

Dans certains serveurs, qui utilisent par exemple des « proxies FTP », c'est à dire des mémoires caches installées chez le fournisseur d'accès et accessibles en protocole FTP, pour télécharger un fichier, il convient de transmettre au fournisseur d'accès une requête de téléchargement contenant l'adresse URL du fichier, ce fichier étant récupéré en réponse à un ordre de transmission émis par le fournisseur d'accès vers le centre serveur s'il n'est pas présent dans la mémoire cache ou renvoyés directement par le fournisseur d'accès si le fichier est stocké dans la mémoire cache. Dans ce dernier cas seulement, l'utilisation d'un « proxy-cache FTP » peut améliorer le téléchargement. Toutefois, ces « proxies-cache » fonctionnent en interceptant la totalité du trafic des utilisateurs, y compris lorsqu'il s'agit de trafic n'ayant aucun rapport avec un téléchargement. Aussi, lorsque le nombre de clients simultanément connectés au fournisseur d'accès est suffisamment élevé, le « proxy-cache » se voit très sollicité et ses performances sont considérablement dégradées. A tel point que les grands fournisseurs d'accès mettent hors service leurs « proxies-cache » opportunément acquis lorsqu'ils avaient à l'origine peu de clients.

Notamment, la coupure de presse datant de juin 1998 disponible sur le site http:/lwww.downloadslave.com, décrit un logiciel de téléchargement permettant d'effectuer un téléchargement sans ralentir l'utilisateur de manière excessive.

L'utilisateur émet une requête de téléchargement qui est effectué entre un serveur fournissant l'information et le fournisseur d'accès de l'utilisateur. L'information est ensuite rapatriée chez l'utilisateur.

Cependant, ce système ne permet pas d'effectuer la première étape du téléchargement au moment le plus approprié, ce qui entraîne des phénomènes de saturation au niveau des fournisseurs d'accès.

Comme on le conçoit, l'architecture classique des réseaux de télécommunications présente, à ce jour, un inconvénient majeur, dans la mesure où, alors que les réseaux d'accès des fournisseurs d'accès au réseau informatique sont capables de véhiculer des données de façon économique et à vitesse élevée, par exemple de l'ordre du mégabit par seconde, les réseaux informatiques longue distance ne sont pas maîtrisés par lés fournisseurs d'accès et sont souvent incompatibles avec les exigences de transfert à haut débit.

Plus précisément, le protocole IPv4 ne permet pas de garantir un débit de bout en bout entre le poste de travail et le centre serveur distant. En revanche, les réseaux d'accès disposent souvent d'une bien meilleure qualité de service, parce que le débit y est très élevé, ce qui est par exemple le cas des réseaux câblés, ou que chaque utilisateur se voit garantir un débit minimal, ce qui est par exemple le cas d'une paire téléphonique dopée par la technologie ADSL (entre 512 kbits/s et 2 Mbit/s par utilisateur dans le sens fournisseur d'accès vers utilisateur).

Même en utilisant le protocole IPv6, qui permet de négocier un débit garanti de bout en bout, les architectures de réseau ne permettent pas d'obtenir un débit de bout en bout proche de celui que permet le seul réseau d'accès sur lequel est raccordé le poste de travail. On peut prendre en exemple les Départements d'Outre-Mer français qui peuvent bénéficier à faible coût d'un réseau d'accès rapide (exemple : ADSL), mais dont l'éloignement impose une connexion au réseau InterNet de débit insuffisant du fait de son coût très élevé dû à l'éloignement des grands centres économiques.

Le serveur de transfert de fichiers connu sous l'appellation FTPMail tente de pallier cet inconvénient en permettant un téléchargement différé d'un fichier. Le téléchargement est effectué au cours d'une cession temporaire choisie de manière à pouvoir optimiser la vitesse du transfert en le réalisant lorsque la charge du réseau est moindre.

Toutefois, dans ce type de dispositif de transfert, mis au point avant l'apparition du Web, les fichiers sont rapatriés à partir d'un contenu hébergé obligatoirement sur un serveur FTP. Les sites Web sont donc inaccessibles au serveur FTPMail.

De plus ce serveur n'est pas capable de gérer des documents composites comme une page Web constituée d'une page de texte et de différents fichiers multimédias (photos JPEG, images GIF, sons AIFF, vidéos QuickTime, etc...).

De surcroît, l'interface utilisateur est constituée par un langage de commandes de type " UNIX shell " fastideux et accessible aux seuls informaticiens chevronnés.

Ainsi, seuls des fichiers simples peuvent être rapatriés. II n'est donc pas possible, selon ce protocole, de rapatrier des fichiers hébergés sur un serveur Web, c'est à dire utilisant le protocole de communication http, et donc de rapatrier, via le réseau internet, des documents complexes et composites, à savoir des documents représentés à l'aide du langage de description de page HTML (Hyper Text-Mark-up Language) qui permet de définir la manière dont les différents éléments du fichier seront représentés sur l'écran du poste de travail de l'utilisateur et de relier entre eux les fichiers en créant des liens logiques, appelés liens hypertextes, qui permettent le passage de page en page.

En outre, le serveur FTPMail ne prévoit pas d'utiliser un mode de restitution hors ligne alors que le fichier à rapatrier peut avoir une taille supérieure à 10 Mega-octets, ce qui le rend difficilement récupérable en ligne, notamment via un accès téléphonique analogique qui constitue encore la grande majorité des accès.

Le but de l'invention est de pallier les inconvénients précités.

L'invention est définie dans les revendications annexées.

Elle a donc pour objet un procédé de téléchargement d'au moins un fichier stocké dans un centre serveur vers un poste de travail connecté à un réseau d'accès utilisé par un fournisseur d'accès à un réseau informatique dans lequel est placé le centre serveur, consistant à transmettre au fournisseur d'accès une requête de téléchargement dudit fichier, **caractérisé en ce qu**'il consiste à récupérer le fichier en réponse à un ordre de transmission de ce fichier à un instant approprié, l'ordre étant émis par le fournisseur d'accès vers le centre serveur, le fichier étant envoyé vers le poste de travail par l'intermédiaire d'une passerelle associée au réseau d'accès, et en ce que la requête de téléchargement est saisie au moyen d'une interface de téléchargement générée en réponse à une demande de téléchargement par l'intermédiaire de la passerelle, formulée par l'utilisateur auprès du fournisseur d'accès l'interface étant intégrée dans un navigateur sur le Web.

Le procédé selon l'invention peut en outre comporter une ou plusieurs des caractéristiques suivantes, prises isolément ou selon toutes les combinaisons techniquement possibles :
- la requête de téléchargement dudit fichier comporte l'adresse (URL) de ce dernier ;
- l'interface est générée au moyen d'un algorithme téléchargé à partir d'un serveur raccordé au réseau informatique et adapté pour proposer un téléchargement de fichiers différé ;
- en réponse à la requête de téléchargement, le fournisseur d'accès transmet la requête vers le centre serveur et en réponse, le centre serveur transmet directement le fichier à télécharger vers la passerelle ;
- le fichier à télécharger est transmis vers le fournisseur d'accès à un instant où la charge du réseau informatique est moindre ou lorsque le nombre d'abonnés simultanément connectés au fournisseur d'accès est faible ;
- en réponse à la transmission du fichier par le centre serveur vers la passerelle, cette dernière transmet vers le poste de travail un message de compte rendu de réception ;
- le fichier est transmis vers le poste de travail selon l'un des moyens choisis parmi une transmission en ligne différée et une édition sur un support de stockage transmis hors ligne vers l'utilisateur ;
- la passerelle est implantée dans un réseau local auquel appartient le poste de travail.

L'invention a également pour objet un dispositif de téléchargement d'au moins un fichier stocké dans un centre serveur vers un poste de travail connecté à un réseau d'accès d'un fournisseur d'accès à un réseau informatique auquel est raccordé le centre serveur, pour la mise en oeuvre d'un procédé selon l'invention, **caractérisé en ce que** le dispositif comporte la passerelle et est implanté au voisinage du réseau d'accès.

D'autres caractéristiques et avantages ressortiront de la description suivante, donnée uniquement à titre d'exemple, et faite en référence aux dessins annexés sur lesquels :
- La figure 1 illustre schématiquement la structure d'un réseau de télécommunications autorisant un procédé de téléchargement conforme à l'invention ;
- La figure 2 est un organigramme illustrant les principales phases de fonctionnement du procédé et du programme d'ordinateur selon l'invention ; et
- La figure 3 montre une copie d'écran du poste de travail d'un utilisateur montrant l'un des modes de réalisation de l'interface de téléchargement, en l'occurrence une interface dissociée du navigateur Web..

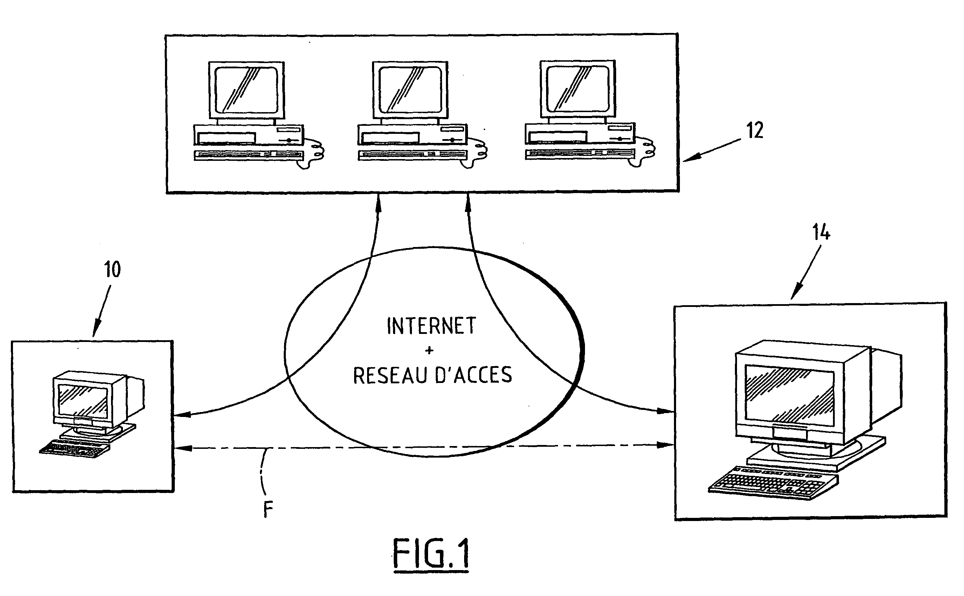

La figure 1 illustre de façon schématique la structure d'un réseau de télécommunications dans lequel peut naviguer un utilisateur disposant d'un poste de travail 10, constitué par un micro-ordinateur.

Comme cela est classique, le poste de travail 10 est connecté à un réseau d'accès utilisé par un fournisseur d'accès 12. Le fournisseur d'accès 12 autorise l'accès à un réseau informatique, par exemple le réseau internet, moyennant la souscription d'un abonnement particulier.

Le fournisseur d'accès 12 met alors à la disposition de l'utilisateur un logiciel de navigation afin de lui permettre de naviguer dans le réseau informatique et d'accéder à des informations les plus variées.

Ainsi, l'utilisateur a la possibilité de récupérer et de télécharger des fichiers stockés dans des centres serveurs Web, tel que 14, c'est à dire des centres serveurs utilisant le protocole de communication http.

Par fichier, on entend dans le cadre de la présente description tout contenu d'un serveur, par exemple une ou plusieurs pages Web, un morceau de musique au format mp3, un logiciel,...

Classiquement, comme cela est représenté sur la figure 1 par la flèche F en traits mixtes, le téléchargement s'effectue en formulant une requête de téléchargement contenant l'adresse URL du ou des fichiers concernés, envoyée directement du poste utilisateur 10 vers le serveur 14 dans lequel ils sont stockés. En réponse, celui-ci transmet le ou les fichiers vers le poste 10 de l'utilisateur.

Comme mentionné précédemment, cette technique de téléchargement présente des inconvénients majeurs, notamment en raison du fait que le téléchargement s'effectue souvent alors que le réseau internet ou le serveur 14 est très sollicité, ce qui engendre un rallongement conséquent de la durée de connexion. Il se fait également sentir une baisse de la vitesse de navigation sur d'autres sites Web durant le téléchargement, ayant des incidences sur le confort perçu par l'utilisateur ou sur sa facture dans le cas d'un réseau d'accès tarifé à la durée, comme par exemple le réseau téléphonique.

En outre, cette technique de téléchargement n'est pas adaptée pour télécharger des fichiers de grande taille comme, par exemple, des mises à jour de logiciels ou des contenus de nature vidéo ou musicale.

Pour pallier cet inconvénient, selon l'invention, on utilise une passerelle vers laquelle est envoyé le ou les fichiers à télécharger en provenance du centre serveur 14.

De préférence, pour augmenter les performances, cette passerelle est située au voisinage du réseau d'accès, qui supporte un transfert à haut débit ou pour lequel la qualité de service est garantie, contrairement au réseau lnternet.

Dans l'exemple de réalisation représentée, la passerelle est agencée sous la forme d'un logiciel stocké dans un centre serveur intégré au fournisseur d'accès 12.

Comme cela sera décrit en détail par la suite, ce logiciel comporte un premier ensemble de codes d'instructions pour transmettre au centre serveur un ordre de transmission du ou des fichiers à télécharger vers la passerelle, formulé par cette dernière en réponse à une requête de téléchargement émise au niveau du poste de travail et un deuxième ensemble de codes d'instructions pour commander la transmission du ou des fichiers récupérés vers le poste de travail.

Bien entendu, on conçoit que la passerelle peut également être implantée en tout point du réseau de télécommunications le plus proche possible de l'utilisateur et ce en fonction de la configuration de ce réseau.

Par exemple, dans les réseaux privés d'entreprise utilisant le protocole IP et baptisés IntraNets, la passerelle peut être implantée directement sur le réseau local de l'entreprise.

Elle peut aussi être implantée en tête d'un réseau d'accès câblé, sur un concentrateur ADSL, sur une station d'émission/réception par satellite,...

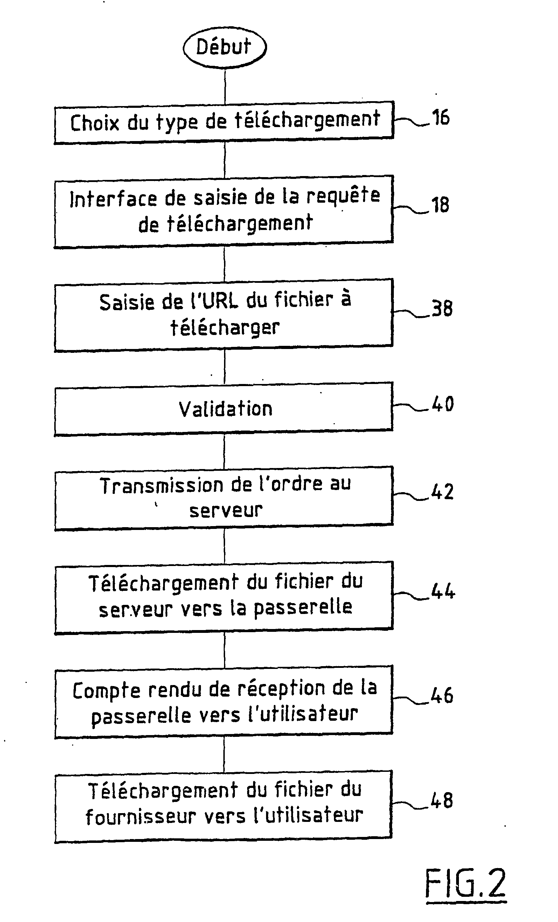

Un exemple de réalisation d'un algorithme mettant en oeuvre la passerelle va maintenant être décrit en référence aux figures 1 et 2.

Sur la figure 2, on a représenté, de façon simplifiée, les principales phases de fonctionnement de l'algorithme de fonctionnement de la passerelle intégrée au fournisseur d'accès 12.

Lors d'une première étape 16, l'utilisateur formule auprès du fournisseur d'accès, au moyen du poste de travail 10, une demande de téléchargement par l'intermédiaire de la passerelle, c'est à dire qu'il sélectionne le mode de téléchargement parmi un téléchargement classique immédiat et direct, et un téléchargement indirect, éventuellement différé, à savoir par l'intermédiaire de la passerelle.

Cette formulation s'effectue de façon très simple, voire transparente pour l'utilisateur si l'un des modes est choisi par défaut.

Par exemple, cette phase 16 préalable peut s'effectuer en réponse à un choix proposé par le fournisseur d'accès 12 qui provoque l'affichage, sur l'écran du poste de travail 10, d'une fenêtre d'activation/désactivation du mode de téléchargement par l'intermédiaire de la passerelle.

En réponse à une sélection du mode de téléchargement indirect, une interface de téléchargement adaptée pour permettre à l'utilisateur de formuler des requêtes de téléchargement est générée sur l'écran du poste de travail 10 (étape 18).

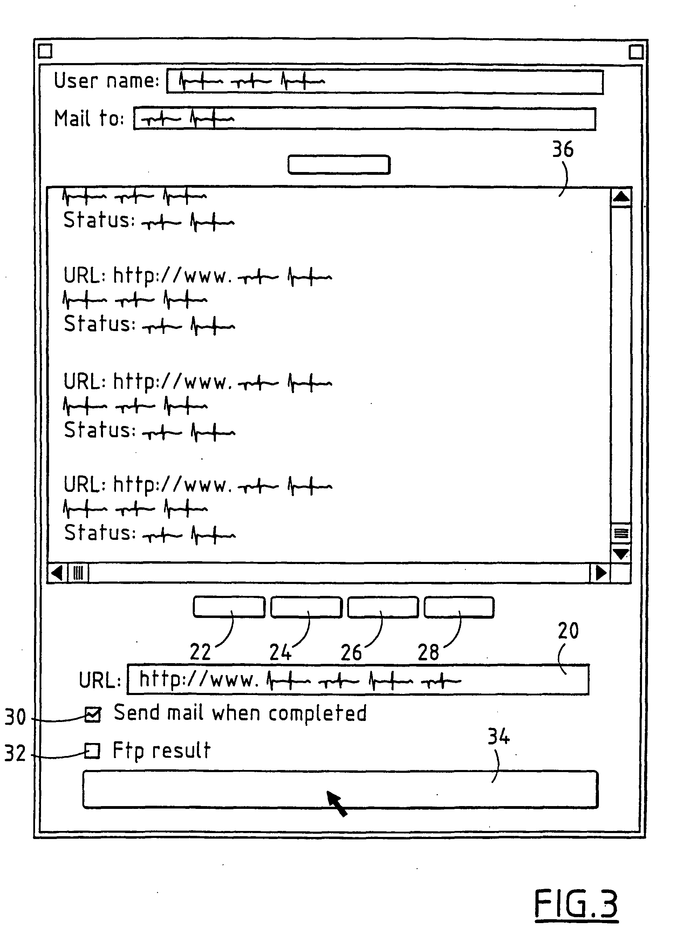

Comme représenté à la figure 3, cette interface est constituée par une fenêtre 20 affichée sur l'écran du poste de travail 10 sur lequel il convient de saisir l'adresse url du fichier à télécharger.

On notera que, associés à cette fenêtre 20, sont également présentés des icônes 22, 24, 26 et 28 de commande de téléchargement, d'effacement, de rafraîchissement, pour savoir quel est l'état des différentes requêtes de téléchargement reçues par la passerelle, et une commande " quitter".

Sont également présentés un icône 30 de commande d'envoi d'un courrier électronique ou mél adressé lorsque la requête de téléchargement est achevée, sous la forme d'un compte rendu de réception, qui, comme cela sera mentionné par la suite, est émis par la passerelle lorsque le centre serveur 14 lui a transmis un fichier, et un icône 32 de restitution du contenu téléchargé sur un serveur FTP préalablement indiqué et judicieusement choisi pour un accès confortable au contenu désiré, par exemple le serveur FTP d'une entreprise connecté à son réseau local, c'est à dire au plus près de l'utilisateur, c'est à dire de l'ordre de quelques mètres.

La liste des téléchargements demandés par un utilisateur donné vient s'afficher, avec indication de l'état de chaque demande de téléchargement, dans une fenêtre 36 sous la forme d'une liste déroulante.

Enfin, un icône 34 de commande de validation est associé à la fenêtre 20 formant interface de téléchargement.

Comme on le conçoit, ces différents éléments viennent s'afficher en parallèle d'une fenêtre 36 classique du navigateur.

De préférence, la fenêtre constituant l'interface de téléchargement est générée, par le fournisseur d'accès 12, en réponse à la demande formulée lors de l'étape 16 précédente, en téléchargeant un algorithme approprié, transmis par le fournisseur d'accès au poste de travail de l'utilisateur. Par exemple cet algorithme est écrit en langage de programmation " Java ", et constitue une application logicielle connue sous la dénomination " appliquette-java".

Lors de la phase 38 suivante, l'utilisateur saisit l'adresse url du fichier à télécharger puis actionne l'icône 34 de commande de validation (étape 40). On notera que la phase 38 s'effectue grâce à un simple " copier-coller " depuis le navigateur Web (exemple : Netscape Navigator 4.5) jusqu'à la fenêtre 20. Dans ce cas, la fastidieuse saisie de l'URL dans la fenêtre 20 est supprimée.

L'adresse url est alors transmise vers le fournisseur d'accès 12.

Celui-ci, en réponse, formule un ordre de transmission et transmet ce dernier au centre serveur 14 (étape 42) .

Lors de l'étape 44 suivante, le serveur 14 émet le fichier à télécharger vers la passerelle.

On notera que, de préférence, cette transmission s'effectue à un instant approprié, c'est à dire de façon différée, à un instant où la charge du réseau longue distance est moindre, c'est à dire, à un instant où d'une part, le trafic sur le réseau est moindre et, d'autre part, le centre serveur 14 est moins sollicité, ou encore lorsque le nombre d'abonnés du fournisseur d'accès simultanément connectés est faible, c'est à dire inférieur à un seuil approprié.

Après transmission du fichier du serveur 14 vers le fournisseur d'accès 12, celui-ci transmet vers le poste de travail 10 de l'utilisateur un compte rendu de réception de manière à présenter à l'utilisateur toutes les indications concernant le téléchargement effectué et, le cas échéant, les incidents de transmission (étape 46).

Enfin, lors de l'étape 48 suivante, le fichier est transmis du fournisseur d'accès 12 vers le poste de travail 10.

Comme mentionné précédemment, la passerelle est implémentée sous la forme d'un logiciel stocké dans un des serveurs constitutifs de l'infrastructure technique du fournisseur d'accès. Cette passerelle peut être réalisée sous la forme d'une architecture distribuée en différents points du réseau de manière à optimiser le transport des fichiers vers les utilisateurs par exemple. On peut ainsi trouver un seul serveur collectant en un point précis du réseau l'ensemble des requêtes de téléchargement des utilisateurs, puis un autre serveur procédant aux rapatriements de fichiers demandés après que le premier serveur lui eu communiqué les URL à télécharger et enfin un ensemble de serveurs situés sur les réseaux d'accès, par exemple sur chacune des têtes de réseaux câblés utilisés par le fournisseur d'accès.

Les étapes 16 à 46 constituent alors le premier ensemble de codes d'instructions, alors que l'étape 48 est réalisée par le deuxième ensemble de codes d'instructions mentionné précédemment.

On notera que cette dernière étape 48 peut être réalisée de différentes façons.

Tout d'abord, dans la mesure où la passerelle est située au voisinage du réseau d'accès du utilisée par le fournisseur d'accès 12, c'est à dire dans une zone du réseau de télécommunications acceptant de véhiculer des données à haut débit ou disposant d'une qualité de service maîtrisée, le transfert du ou des fichiers du fournisseur d'accès vers le poste de travail 10 peut être effectué à vitesse élevée ou garantie contrairement au réseau InterNet. Ainsi, les étapes 46 et 48 peuvent être fusionnées et le fichier transmis à l'utilisateur en tant que pièce jointe au compte rendu de réception véhiculé par messagerie électronique (mél).

La passerelle peut également transmettre à l'utilisateur une adresse URL à laquelle le fichier peut être récupéré.

En variante, d'autres modes de réception peuvent également être adoptés.

Ainsi, il est possible de transférer le fichier, en ligne, de façon différée, c'est à dire à un instant où le trafic sur le réseau d'accès est moindre, déterminé à l'aide de critères statistiques à partir d'un historique du réseau.

Il est également possible, pour les fichiers de grande taille, par exemple supérieure à 10 Mega-octets, de choisir une restitution hors ligne, sous la forme d'un support matériel enregistré puis transmis à l'utilisateur par tout moyen approprié, par exemple par courrier ou par porteur.

On conçoit que l'invention qui vient d'être décrite, qui permet le téléchargement d'un fichier par l'intermédiaire d'une passerelle, présente de nombreux avantages, d'une part, pour l'utilisateur et, d'autre part, pour l'opérateur de télécommunications fournissant l'accès au réseau informatique.

En effet, dans différents modes de réalisation, l'utilisateur a la possibilité de continuer à interroger des centres serveurs pour la récupération d'informations sans que son propre accès au réseau soit encombré par la réception simultanée du contenu à télécharger.

En outre, la durée de connexion nécessaire pour rapatrier un fichier est considérablement réduite, notamment dans le cas des hauts débits de type ADSL, d'où un net supplément de confort d'usage.

L'avantage majeur pour les opérateurs de télécommunications réside dans le fait que ceux-ci ont la possibilité de déporter une partie du trafic vers des périodes dans lesquels le nombre de connexions est relativement faible. Il leur est ainsi possible de fournir un service amélioré pour tous les utilisateurs, y compris ceux ne téléchargeant pas, et d'optimiser leurs canaux de transmission longue distance (classiquement facturés au forfait mensuel quels que soient les volumes transmis).

On notera enfin que l'invention décrite précédemment n'est pas limitée aux modes de réalisation envisagés.

C'est ainsi que l'interface de téléchargement peut également être générée au moyen d'un algorithme téléchargé à partir d'un centre serveur qui est raccordé au réseau informatique et qui autorise un téléchargement de fichiers différés, comme, par exemple, un moteur de recherche.

En variante, l'interface peut également être intégrée au logiciel de navigation implanté dans le poste de l'utilisateur.

## Revendications

1. Procédé de traitement d'une requête de téléchargement d'au moins un fichier stocké dans un centre serveur Web ou FTP (14) vers un poste de travail (10) connecté à un réseau d'accès d' un fournisseur d'accès (12) à un réseau informatique duquel est raccordé le centre serveur (14), le procédé comprenant les étapes suivantes :
- un serveur du fournisseur d'accès reçoit ladite requête de téléchargement contenant l'adresse (URL) du fichier à télécharger,
- le serveur du fournisseur d'accès émet, vers le centre serveur (14), un ordre de transmission du fichier,
**caractérisé en ce que**
- en réponse audit ordre de transmission, le fichier est transmis vers le poste de travail (10) via une passerelle associée au réseau d'accès sans que l'accès au réseau informatique à partir du poste de travail (10) no soit encombré par la transmission du fichier.

2. Procédé selon la revendication 1 dans lequel la passerelle est située dans une zone du réseau de télécommunications permettant de véhiculer des données à haut débit de telle manière qu'un transfert d'un fichier de la passerelle vers le poste de travail peut s'effectuer avec une vitesse garantie.

3. Procédé selon la revendication 1 ou 2 dans lequel la passerelle est située dans une zone du réseau de télécommunications disposant d'une qualité de service maîtrisée.

4. Procédé selon la revendication 1, **caractérisé en ce que** la requête de téléchargement est saisie au moyen d'une interface (20) de téléchargement générée en réponse à une demande de téléchargement par l'intermédiaire de la passerelle, formulée par l'utilisateur auprès du serveur du fournisseur d'accès (12).

5. Procédé selon la revendication 4, **caractérisé en ce que** l'interface est intégrée dans un navigateur sur le Web implanté dans le poste de travail (10).

6. Procédé selon l'une quelconque des revendications 1 à 5, **caractérisé en ce qu'**en réponse à la réception du fichier par la passerelle, cette dernière transmet vers le poste de travail (10) un message de compte rendu de réception.

7. Procédé selon l'une quelconque des revendications 1 à 6, **caractérisé en ce que** la passerelle est implantée soit dans un réseau local auquel appartient le poste de travail (10), soit en tête d'un réseau d'accès câblé, soit sur un concentrateur ADSL, soit sur une station d'émission/réception par satellite,

8. Serveur d'un fournisseur d'accès à un réseau informatique, le serveur comprenant
- des moyens de réception d'une requête de téléchargement d'au moins un fichier stocké dans un centre serveur Web ou FTP (14) raccordé audit réseau informatique, ladite requête contenant l'adresse (URL) du ficher à télécharger vers un poste de travail (10) connecté à un réseau d'accès du fournisseur d'accès (12),
- des moyens d'émission à destination du centre serveur (14), d'un ordre de transmission dudit au moins un fichier,
**caractérisé en ce que**, en réponse audit ordre de transmission, le fichier est transmis vers le poste du travail (10) via une passerelle associée au réseau d'accès sans que l'accès au réseau informatique à partir du poste de travail (10) ne soit encombré par la transmission du fichier.

9. Passerelle pour la mise en oeuvre d'un procédé de téléchargement d'au moins un fichier à partir d'un centre serveur Web ou FTP vers un poste de travail (10) connecté à un réseau d'accès (12) à un réseau informatique auquel est raccordé le centre serveur (14), **caractérisé en ce que**
la passerelle est associée au réseau d'accès et comprend des moyens de réception, en provenance dudit centre serveur, d'un fichier pour lequel un ordre de transmission a été émis par un serveur d'un fournisseur d'accès audit réseau informatique,
ledit fichier étant transmis, en réponse audit ordre de transmission, vers le poste de travail (10) via la passerelle, sans que l'accès au réseau informatique à partir du poste de travail (10) ne soit encombré par la transmission du fichier.

10. Programme comprenant un ensemble de codes d'instructions pour
afficher une interface (20) pour formuler une requête de téléchargement vers un poste de travail (10) connecté à un réseau d'accès d'un fournisseur d'accès (12) à un réseau informatique, d'au moins un fichier stocké dans un centre serveur Web ou FTP (14) raccordé audit réseau informatique
- transmettre, à un serveur du fournisseur d'accès, une requête de téléchargement ayant été formulée dans ladite interface, **caractérisé en ce que** la requête de téléchargement est destinée à provoquer une émission par ledit serveur vers le centre serveur d'un ordre de transmission,
le fichier étant transmis, en réponse audit ordre de transmission, vers le poste du travail (10) via une passerelle associée au réseau d'accès, sans que l'accès au réseau informatique à partir du poste de travail (10) ne soit encombré par la transmission du fichier.

## Claims

1. Method for processing a request to download at least one file stored in a web or FTP server centre (14) to a work station (10) connected to an access network of an access provider (12) providing access to a computer network to which the server centre (14) is connected, the method comprising the following steps:
- a server of the access provider receives said download request containing the address (URL) of the file to be downloaded,
- the server of the access provider sends, to the server centre (14), an instruction to transmit the file,
**characterized in that**
- in response to said transmit instruction, the file is transmitted to the work station (10) via a gateway associated with the access network without the access to the computer network from the work station (10) being congested by the transmission of the file.

2. Method according to Claim 1, in which the gateway is situated in an area of the telecommunication network that allows data to be conveyed at high bit rates so that a transfer of a file from the gateway to the work station can be performed with a guaranteed speed.

3. Method according to Claim 1 or 2, in which the gateway is situated in an area of the telecommunication network that has a controlled quality of service.

4. Method according to Claim 1, **characterized in that** the download request is entered by means of a download interface (20) generated in response to a download request via the gateway, submitted by the user to the server of the access provider (12).

5. Method according to Claim 4, **characterized in that** the interface is incorporated in a web browser installed on the work station (10).

6. Method according to any one of Claims 1 to 5, **characterized in that**, in response to the reception of the file via the gateway, said gateway transmits a reception report message to the work station (10).

7. Method according to any one of Claims 1 to 6, **characterized in that** the gateway is installed either in a local area network to which the work station (10) belongs, or at the head-end of a wired access network, or to an ADSL hub, or to a satellite transceiver station.

8. Server of an access provider providing access to a computer network, the server comprising
- means of receiving a request to download at least one file stored in a web or FTP server centre (14) connected to said computer network, said request containing the address (URL) of the file to be downloaded to a work station (10) connected to an access network of the access provider (12),
- means of sending, to the server centre (14), an instruction to transmit said at least one file,
**characterized in that**, in response to said transmit instruction, the file is transmitted to the work station (10) via a gateway associated with the access network without the access to the computer network from the work station (10) being congested by the transmission of the file.

9. Gateway for implementing a method for downloading at least one file from a web or FTP server centre to a work station (10) connected to an access network (12) providing access to a computer network to which the server centre (14) is connected, **characterized in that** the gateway is associated with the access network and comprises means of receiving, from said server centre, a file for which a transmit instruction has been sent by a server of an access provider to said computer network,
said file being transmitted, in response to said transmit instruction, to the work station (10) via the gateway, without the access to the computer network from the work station (10) being congested by the transmission of the file.

10. Program containing a set of instruction codes for
- displaying an interface (20) for submitting a request to download, to a work station (10) connected to an access network of an access provider (12) providing access to a computer network, at least one file stored in a web or FTP server centre (14) connected to said computer network,
- transmitting, to a server of the access provider, a download request having been submitted in said interface, **characterized in that**
the download request is intended to provoke a transmission by said server to the server centre of a transmit instruction,
the file being transmitted, in response to said transmit instruction, to the work station (10) via a gateway associated with the access network, without the access to the computer network from the work station (10) being congested by the transmission of the file.

## Patentansprüche

1. Verfahren zur Verarbeitung einer Anforderung zum Fernladen mindestens einer in einem Web- oder FTP-Server-Zentrum (14) gespeicherten Datei zu einer Arbeitsstation (10), die mit einem Zugangsnetz eines Zugangsanbieters (12) zu einem Informatiknetz verbunden ist, an das das Server-Zentrum (14) angeschlossen ist, wobei das Verfahren die folgenden Schritte enthält:
- ein Server des Zugangsanbieters empfängt die Fernladeanforderung, die die Adresse (URL) der fernzuladenden Datei enthält,
- der Server des Zugangsanbieters sendet einen Übertragungsbefehl der Datei an das Server-Zentrum (14),
**dadurch gekennzeichnet, dass**
- als Antwort auf den Übertragungsbefehl die Datei über ein dem Zugangsnetz zugeordnetes Gateway an die Arbeitsstation (10) übertragen wird, ohne dass der Zugang zum Informatiknetz ausgehend von der Arbeitsstation (10) durch die Übertragung der Datei belastet wird.

2. Verfahren nach Anspruch 1, bei dem das Gateway sich in einer Zone des Telekommunikationsnetzes befindet, die es erlaubt, Daten mit hoher Geschwindigkeit zu übertragen, so dass eine Übertragung einer Datei vom Gateway zur Arbeitsstation mit garantierter Geschwindigkeit erfolgen kann.

3. Verfahren nach Anspruch 1 oder 2, bei dem das Gateway sich in einer Zone des Telekommunikationsnetzes befindet, die über eine kontrollierte Dienstqualität verfügt.

4. Verfahren nach Anspruch 1, **dadurch gekennzeichnet, dass** die Fernladeanforderung mittels einer Fernladeschnittstelle (20) eingegeben wird, die als Antwort auf eine Fernladeanforderung über das Gateway erzeugt wird, die vom Benutzer beim Server des Zugangsanbieters (12) formuliert wird.

5. Verfahren nach Anspruch 4, **dadurch gekennzeichnet, dass** die Schnittstelle in einen Webbrowser integriert ist, der in die Arbeitsstation (10) eingesetzt ist.

6. Verfahren nach einem der Ansprüche 1 bis 5, **dadurch gekennzeichnet, dass**, als Antwort auf den Empfang der Datei durch das Gateway, letzteres eine Empfangsprotokoll-Mitteilung an die Arbeitsstation (10) überträgt.

7. Verfahren nach einem der Ansprüche 1 bis 6, **dadurch gekennzeichnet, dass** das Gateway entweder in ein lokales Netz, zu dem die Arbeitsstation (10) gehört, oder am Kopfende eines verkabelten Zugangsnetzes, oder in einen ADSI-Konzentrator, oder in eine Satelliten-Sende-/Empfangsstation eingesetzt ist.

8. Server eines Zugangsanbieters zu einem Informatiknetz, wobei der Server enthält
- Empfangseinrichtungen einer Fernladeanforderung mindestens einer in einem an das Informatiknetz angeschlossenen Web- oder FTP-Server-Zentrum (14) gespeicherten Datei, wobei die Anforderung die Adresse (URL) der Datei enthält, die zu einer mit einem Zugangsnetz des Zugangsanbieters (12) verbundenen Arbeitsstation (10) ferngeladen werden soll,
- Sendeeinrichtungen eines Übertragungsbefehls der mindestens einen Datei an das Server-Zentrum (14), **dadurch gekennzeichnet, dass** die Datei als Antwort auf den Übertragungsbefehl über ein dem Zugangsnetz zugeordnetes Gateway an die Arbeitsstation (10) übertragen wird, ohne dass der Zugang zum Informatiknetz ausgehend von der Arbeitsstation (10) durch die Übertragung der Datei belastet wird.

9. Gateway zur Durchführung eines Verfahrens zum Fernladen mindestens einer Datei ausgehend von einem Web- oder FTP-Server-Zentrum zu einer Arbeitsstation (10), die mit einem Zugangsnetz (12) zu einem Informatiknetz verbunden ist, an das der Server-Zentrum (14) angeschlossen ist, **dadurch gekennzeichnet, dass** das Gateway dem Zugangsnetz zugeordnet ist und Einrichtungen für den Empfang einer Datei vom Server-Zentrum aufweist, für die ein Übertragungsbefehl von einem Server eines Zugangsanbieters zum Informatiknetz gesendet wurde,
wobei die Datei als Antwort auf den Übertragungsbefehl über das Gateway an die Arbeitsstation (10) gesendet wird, ohne dass der Zugang zum Informatiknetz ausgehend von der Arbeitsstation (10) durch die Übertragung der Datei belastet wird.

10. Programm, das eine Einheit von Anweisungscodes enthält, um
- eine Schnittstelle (20) anzuzeigen, um eine Anforderung zum Fernladen zu einer mit einem Zugangsnetz eines Zugangsanbieters (12) zu einem Informatiknetz verbundenen Arbeitsstation (10) mindestens einer Datei zu formulieren, die in einem Web- oder FTP-Server-Zentrum (14) gespeichert ist, der an das Informatiknetz angeschlossen ist,
- an einen Server des Zugangsanbieters eine Fernmeldeanforderung zu übertragen, die in der Schnittstelle formuliert wurde,
**dadurch gekennzeichnet, dass**
die Fernladeanforderung dazu bestimmt ist, das Senden eines Übertragungsbefehls vom Server zum Server-Zentrum zu bewirken,
wobei die Datei als Antwort auf den Übertragungsbefehl über ein dem Zugangsnetz zugeordnetes Gateway an die Arbeitsstation (10) übertragen wird, ohne dass der Zugang zum Informatiknetz ausgehend von der Arbeitsstation (10) durch die Übertragung der Datei belastet wird.
